# NEW EUROPEAN PATENT SPECIFICATION

(11) **EP 0 487 859 B2**
(45) Date of publication and mention of the opposition decision: **29.12.1997**
(45) Mention of the grant of the patent: 04.01.1995
(21) Application number: 91116780.7
(22) Date of filing: 01.10.1991
(51) Int. Cl.: B60S 1/34

(54) **Wiper apparatus for vehicle**
Scheibenwischervorrichtung für Kraftfahrzeuge
Dispositif d'essuie-glace pour véhicules

(30) Priority: 30.11.1990 JP 339615/90
(43) Date of publication of application: 03.06.1992
(73) Proprietor: ASMO CO., LTD., Kosai-shi Shizuoka-ken (JP)
(72) Inventor: Sugahara, Yasushi, Toyohasi-shi, Aichi-ken (JP); Murata, Shinji, Hamamatsu-shi, Shizuoka-ken (JP)
(74) Representative: Dreiss, Fuhlendorf, Steimle & Becker, Patentanwälte

(56) References cited:
- EP-A- 0 021 914
- EP-A- 0 207 404
- EP-A- 0 412 804
- DE-A- 3 231 849
- DE-A- 3 444 927
- DE-A- 3 719 874
- DE-A- 3 829 939
- DE-A- 3 918 106
- DE-B- 1 555 256
- GB-A- 2 213 709

## Description

### BACKGROUND OF THE INVENTION

### Field of the Invention:

The present invention relates to a windshield wiper for a vehicle for wiping the windshield or the like of an automobile.

### Description of the Related Art:

A windshield wiper for a vehicle for wiping the windshield or the like of an automobile is so arranged that, in order to allow a blade rubber to reliably wipe the windshield surface in close contact therewith, a tensile spring or the like is connected to a wiper arm for holding the blade rubber, thereby imparting a predetermined arm pressure to the wiper arm.

A lift force acting on the wiper varies in correspondence with vehicle speed. That is, the lift force increases with an increase in the vehicle speed. For this reason, if the arm pressure imparted to the wiper arm is set in correspondence with a low running speed of the vehicle, during high-speed running a so-called floating of the wiper blade (i.e., the blade rubber) occurs owing to an increased lift force acting on the wiper. Accordingly, in this case, the blade rubber is not brought into close contact with the windshield surface, causing wiper performance to decline. Meanwhile, if the arm pressure imparted to the wiper arm is set in correspondence with a high running speed of the vehicle, during low-speed running, a larger than necessary arm pressure is imparted to the wiper arm, resulting in an increase in the operating noise of the wiper and an early deterioration of the blade rubber.

Accordingly, a windshield wiper capable of changing the arm pressure in correspondence with the running speed of the vehicle has been proposed in EP-A-0 207 404 and JP-A-6853/87, respectively.

In this windshield wiper, one end of the tensile spring for imparting an arm pressure is connected to one end of a lever supported rotatably on an arm head. In addition, a pivot shaft is formed with a hollow configuration, and a rod is inserted therein. An upper end portion of the rod abuts against the other end portion of the lever, and a lower end portion thereof engages a worm gear rotated by a motor. The rotation of the worm gear causes the rod to move in the axial direction, and as the rod moves, one end portion of the lever is pressed to cause the lever to rotate about its support shaft. As a result, the position in which the tensile spring is supported is changed, thereby changing the arm pressure.

With this windshield wiper, since the motor is rotated in correspondence with the running speed of the vehicle, and the position in which the tensile spring Is supported is thereby changed, an optimum arm pressure can be imparted to the wiper arm, thereby allowing the blade rubber to be brought into the windshield surface at all times. Hence, it is possible to secure the predetermined wiping performance irrespective of the running speed of the vehicle.

However, with the above-described windshield wiper, since the arrangement provided is such that the rod is inserted through the hollow pivot shaft to rotate the lever, there have been drawbacks in that the structure is relatively complicated, and the number of components used is large, and that the overall size of the apparatus is large.

In addition, since the arrangement provide is such that the torque of the worm gear is converted to an axially moving force so as to be imparted to the lever and change the position in which the tensile spring is supported, a relatively long time is required to effect a change from the state of minimum arm pressure to the state of maximum arm pressure, i.e., to change the tensile-spring supporting position from one end position to the other. Hence, there has been a drawback in that the response characteristic (i.e., instantaneous response characteristic) at the time of changing the arm pressure is very poor.

Furthermore, with the above-described windshield wiper, since the number of components used is large and a long rod is used, the wiping performance is liable to be affected by dimensional accuracy and assembling accuracy. For this reason, an assembling-position adjusting mechanism (e.g., adjust screws) for absorbing the variation of the arm pressure during assembling has been indispensable.

A windshield wiper according to the preamble of claim 1 and known from DE 38 29 939 A1 (E1) discloses in its figures 2 to 4 a cam member having a circular groove which can be rotated eccentrically to its center. The end of the lever inserts into the groove. When rotating the cam member the lever is pivoted around axis. As the groove rotates eccentrically its single contact surface being radially directed is continuous. Because of this continuous contact surface there is no stable positioning of the lever when adjusting different pressure levels for the windshield wiper.

### SUMMARY OF THE INVENTION

Accordingly, an object of the present invention is to provide a windshield wiper for a vehicle capable of speedily changing arm pressure to an optimum arm pressure in correspondence with the running speed of the vehicle so as to cause a blade rubber to be brought into close contact with a windshield surface.

Another object of the present invention is to provide a windshield wiper for a vehicle capable of maintaining the wiping performance irrespective of the running speed of the vehicle.

Still another object of the present invention is to provide a windshield wiper for a vehicle which can be realized with a compact and simple structure.

Still a further object of the present invention is to provide a windshield wiper for a vehicle which can maintain the selected pressure level.

To these ends, in accordance with the present invention, there is provided a windshield wiper with a wiping pressure selectively adjustable to a low, an intermediate, a high or a maximum pressure level, in a vehicle comprising the features of claim 1.

In accordance with the above described arrangement, the cam member is rotated as the cam member moving member is actuated in correspondence with the running state of the vehicle. As a result, the position in which the spring lever is supported by the contact surfaces of the cam member is changed to rotate the spring lever about the axis, so that the position in which the other end of the spring for urging the wiper arm is changed. Accordingly, the urging force of the spring imparted to the wiper arm is changed, with the result that the arm pressure is set to an optimum level corresponding to the running speed of the vehicle. Thus, if is possible to allow the wiper blade to be brought into close contact with the windshield surface at all times, thereby making it possible to secure desired wiping performance irrespective of the running speed of the vehicle. In addition, since the arm pressure can be changed directly by the rotation of the cam member, it is possible to change the arm pressure speedily to an optimum level. In addition, the structure can be made simple.

As there are a plurality of contact surfaces each of which is disposed at a different height in axial direction the spring lever can be stably supported at each of these discrete contact surfaces. Further, according to these features the level of the blade pressure can be selectively adjusted to specific, as low, medium and maximum pressure levels. As the contact surfaces have different heights in axial direction the spring lever is more stable. Therefore, the wiper device can maintain the selected pressure level.

### BRIEF DESCRIPTION OF THE DRAWINGS

Fig. 1 is a cross sectional view illustrating a cam of a windshield wiper and its peripheral components in accordance with an embodiment of the present invention;
Fig. 2 is a perspective view of the cam;
Fig. 3 is a perspective view of the cam taken from the direction of arrow A in Fig. 2;
Fig. 4 is a perspective bottom view of the cam taken from the rear side thereof;
Fig. 5A is a plan view of a cover;
Fig. 5B is a cross-sectional view of the cover taken along the line B - B in Fig. 5A;
Fig. 6 is an overall schematic diagram of a wiper apparatus having two windshield wipers;
Fig. 7 is a cross-sectional view corresponding to Fig. 1, in which the am pressure is set at a low level;
Figs. 8A to 8E are schematic diagrams illustrating the operation at the time when the arm pressure is increased from a low level to an intermediate level;
Fig. 9 is a cross-sectional view corresponding to Fig. 1, in which the arm pressure is set at the intermediate level;
Figs. 10A to 10E are schematic diagrams illustrating the operation at the time when the arm pressure is increased from the intermediate level to a high level;
Fig. 11 is a cross-sectional view corresponding to Fig. 1, in which the arm pressure is set at the high level;
Figs. 12A to 12E are schematic diagrams illustrating the operation at the time when the arm pressure is increased from the high level to a maximum level;
Fig. 13 is a cross-sectional view corresponding to Fig. 1, in which the arm pressure is set at the maximum level;
Figs. 14A to 14D are schematic diagrams illustrating the operation at the time when the arm pressure is decreased from the maximum level to the high level;
Figs. 15A to 15D are schematic diagrams illustrating the operation at the time when the arm pressure is decreased from the high level to the intermediate level;
Figs. 16A to 16D are schematic diagrams illustrating the operation at the time when the am pressure is decreased from the intermediate level to the low level;
Figs. 17A to 17D are schematic diagrams illustrating the operation at the time when the arm pressure is decreased from the high level to the low level; and
Figs. 18A to 18D are schematic diagrams illustrating the operation at the time when the arm pressure is decreased from the maximum level to the low level.

### DESCRIPTION OF THE PREFERRED EMBODIMENT

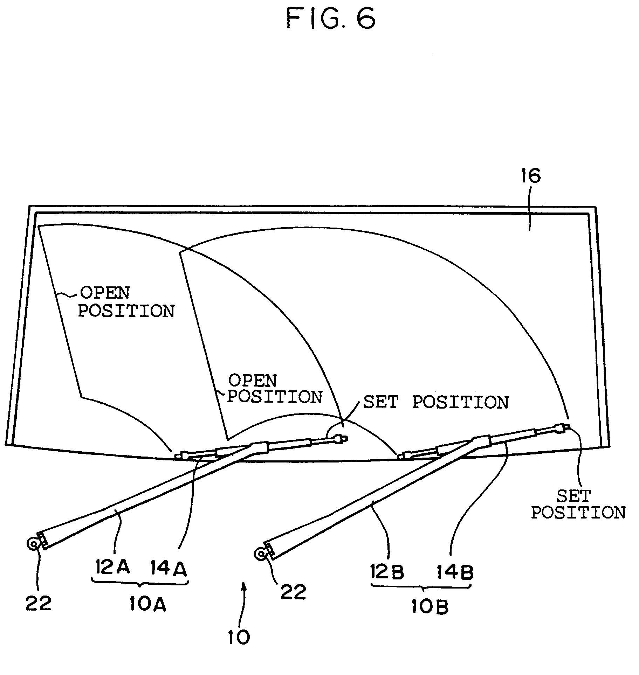

Fig. 6 illustrates an overall schematic diagram of a wiper apparatus 10 having two windshield wipers for a vehicle in accordance with an embodiment of the present invention.

The wiper apparatus 10 is of a so-called parallel interlocked type comprising a right wiper 10A and a left wiper 10B which basically have identical constructions. The left and right wipers 10A, 10B are provided with wiper arms 12A, 12B and wiper blades 14A, 14B, respectively. As the wiper arms 12A, 12B are reciprocatively rotated, the wiper blades 14A, 14B are reciprocatively rotated from a set position to an open position so as to wipe off raindrops and the like attached to a windshield 16.

Since the right wiper 10A and the left wiper 10B are basically provided with identical structures, a description will be given hereinunder using the right wiper 10A.

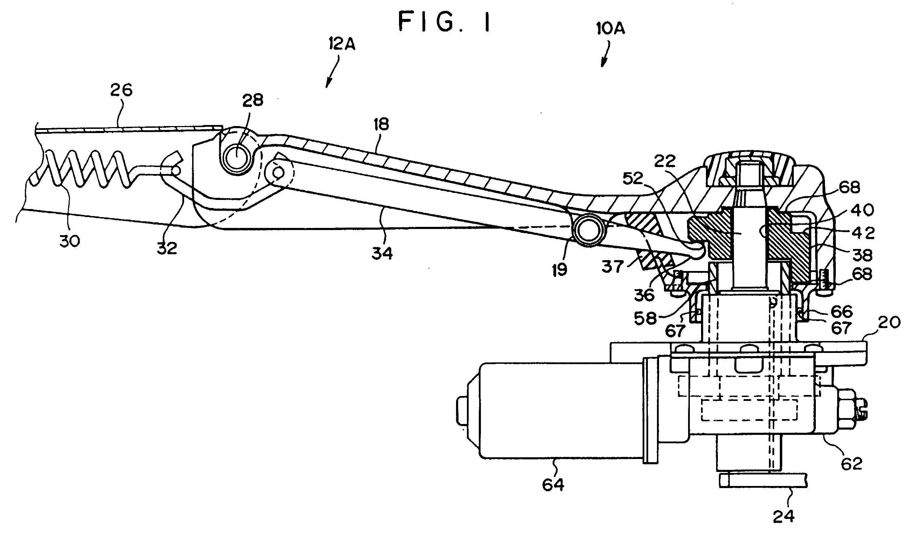

Fig. 1 shows a schematic cross-sectional view of the right wiper 10A. In the right wiper 10A, one end portion of an arm head 18 constituting a part of the wiper arm 12A is secured to a distal end of a pivot shaft 22 supported rotatably on a base 20, so that the wiper arm 12A and the wiper blade 14A (not shown) always rotate with the pivot shaft 22. A link lever 24 is connected to a lower end portion of the pivot shaft 22, and is reciprocatively rotated by an unillustrated wiper motor.

Meanwhile, a retainer 26 is connected to the other end portion of the arm head 18 via a support shaft 28 in such a manner as to be rotatable over the range of a predetermined angle. The wiper blade 14A (not shown) is held by a distal end of the retainer 26. The wiper blade 14A is arranged such that a blade rubber abutting against the windshield 16 is held by a plurality of levers including a yoke lever, a secondary lever, and a primary lever (not shown). As the blade rubber is reciprocatively rotated in close contact with the windshield 16, raindrops and the like are wiped off.

One end of a tensile spring 30 is connected to the retainer 26, and the other end of the tensile spring 30 is connected to a spring lever 34 via a hook 32.

The spring lever 34 is rotatably supported by an arm portion 19 which extends from an intermediate portion of the arm head 18 towards the windshield surface. For this reason, the retainer 26 is constantly urged by the urging force of the tensile spring 30 toward the arm head 18 (i.e., the pivot shaft 22), i.e., toward the windshield 16.

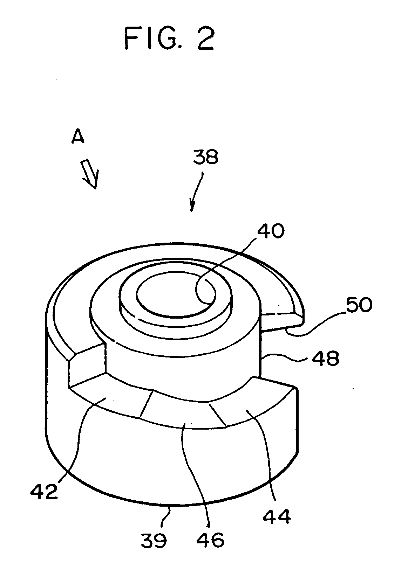

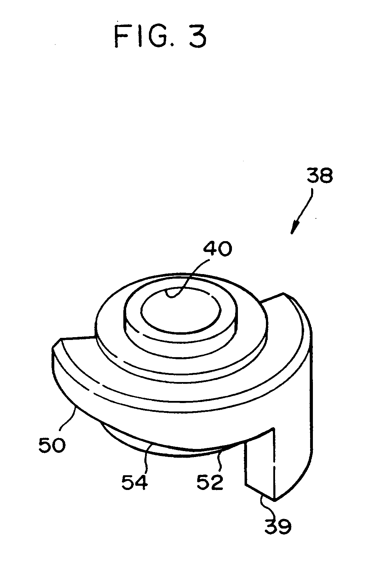

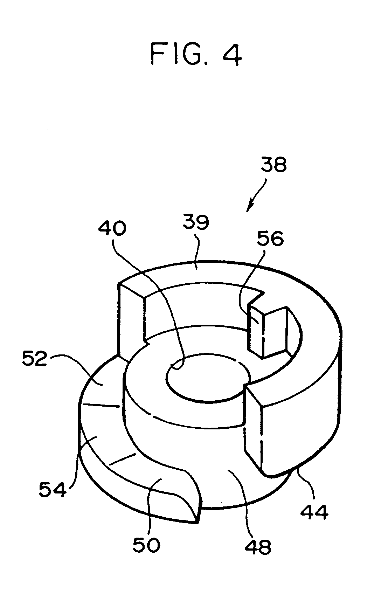

Meanwhile, one end of the spring lever 34 is formed in a substantially spherical configuration so as to constitute an abutting portion 36. The abutting portion 36 is inserted through a rubber boot 37 which waterproofs the interior of the pivot shaft 22 of the arm head 18 and abuts against a cam 38. The cam 38 is disposed around the outer periphery of the pivot shaft 22 coaxially with and rotatably relative to the pivot shaft 22. Fig. 2 shows a perspective view of the cam 38, and Fig. 3 shows a perspective view of the cam 38 taken in the direction of arrow A in Fig. 2. In addition, Fig. 4 shows a perspective view of the cam 38 taken from the rear side thereof.

The cam 38 is substantially cylindrical in configuration, and the pivot shaft 22 is inserted through a through hole 40 formed in its center. As shown in detail in Fig. 2, the diameter of a portion of the cam 38 in the vicinity of an upper end thereof is made small over a range of about 100° in the circumferential direction, with the result that an upper contact surface 42 and an upper contact surface 44 are formed perpendicularly to the axial direction. The height (the dimension from a bottom surface 39 of the cam 38) of the upper contact surface 42 is set to be higher than the height of the upper contact surface 44, and the upper contact surfaces 42, 44 are formed continuously via a gradually slanted surface 46. The abutting portion 36 of the spring lever 34 is capable of abutting against the upper contact surface 42, slanted surface 46, and upper contact surface 44. The spring lever 34 is thus arranged to be supported on any one of these positions.

In addition, as shown in detail in Fig. 2, a gap portion 48 having the same diameter as that of the side wall portions of the upper contact surface 42, slanted surface 46, and upper contact surface 44 is formed with a reduced diameter over a range of about 20° in the circumferential direction. Furthermore, the diameter of a portion of the cam 38 in the vicinity of a lower end thereof (as viewed in Fig. 4) on the side of the gap portion 48 is small over a range of about 130° in the circumferential direction, with the result that a lower contact surface 50 and a lower contact surface 52 are formed perpendicularly to the axial direction. The height (the dimension from a bottom surface 39 of the cam 38) of the lower contact surface 50 is set to be higher than the height of the lower contact surface 52, and the lower contact surfaces 50, 52 are connected to each other via a slanted surface 54. The abutting portion 36 of the spring lever 34 is also capable of abutting against the lower contact surface 50, slanted surface 54, and lower contact surface 52. Hence, the spring lever 34 can also be supported on any one of these positions.

Meanwhile, as shown in Fig. 4, a projection 56 projecting radially inwardly is formed on the rear side of the cam 38, and is capable of engaging a motor gear 58 (see Fig. 1) constituting a part of an actuating means.

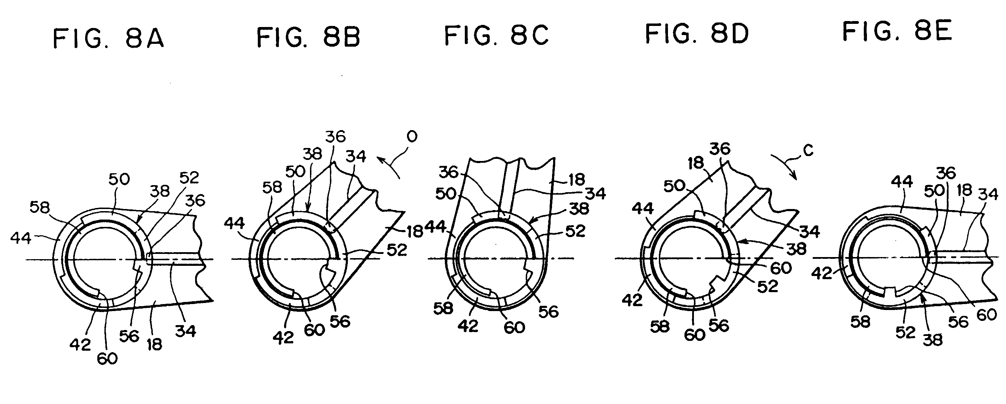

The motor gear 58 is formed in a substantially cylindrical configuration, and is disposed below the cam 38 and around the pivot shaft 22 coaxially with and rotatably relative to the pivot shaft 22. A part of the outer periphery of the motor gear 58 is notched over a range of about 90° in the circumferential direction, thereby forming a notched portion 60 (shown in Figs. 8A to 8E). The projection 56 of the cam 38 is fitted into this notched portion 60. As a result, as the motor gear 58 rotates, the side wall of the notched portion 60 abuts against the projection 56 and is hence capable of pressing the same. As seen in Fig. 1, a motor 64 constituting another part of the actuating means is connected to a lower end of the motor gear 58 via a worm wheel and a worm gear (not shown) incorporated in a housing 62, and the motor gear 58 is rotated as the motor 64 is operated.

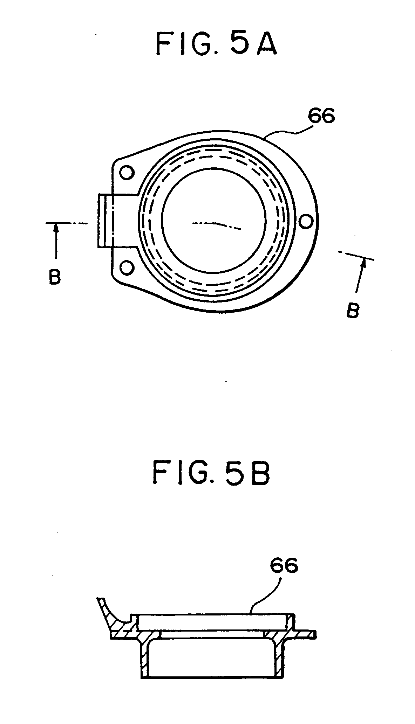

A cover 66 is disposed around the outer periphery of the motor gear 58. As shown in Figs. 5A and 5B, the cover 66 has a substantially cylindrical configuration and is secured at a lower-end opening of the arm head 18. The cover 66 shields (see Fig. 1) the gap between the arm head 18 and the housing 62 so as to prevent the entrance of foreign objects therebetween. In addition, an O-ring 67 is interposed between the cover 66 and the housing 62 to provide a tighter shielding.

Washers 68 are interposed between the cover 66 and the cam 38 and between the arm head 18 and the cam 38, respectively, so as to reduce sliding resistance occurring as the cam 38 rotates.

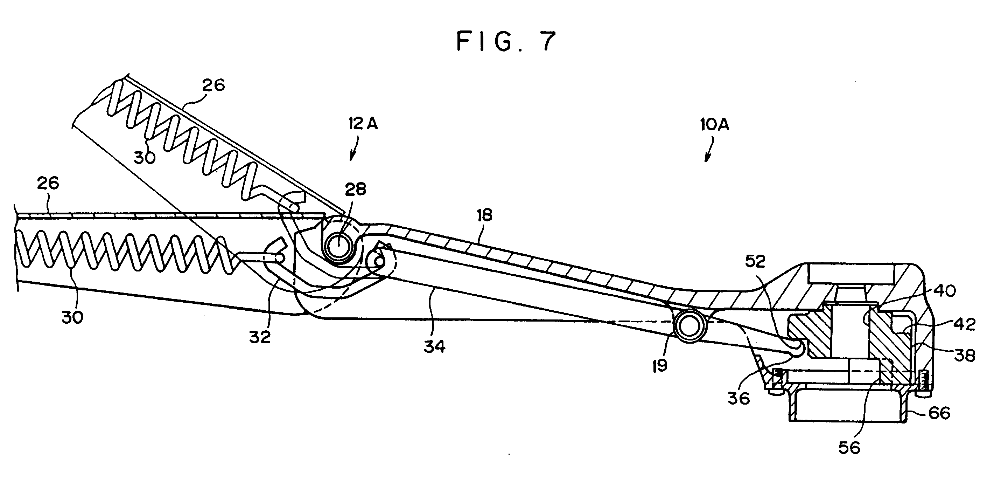

The operation of this embodiment will now be described with reference to cross-sectional views and explanatory diagrams shown in Fig. 7 to Fig. 18D. It should be noted that in the drawings arrow C indicates the moving direction of the right wiper 10A for a closing operation, while arrow O indicates the moving direction of the right wiper 10A for an opening operation.

In the right wiper 10A (i.e., the wiper apparatus 10) constructed as described above, the arm pressure of the wiper arm 12A (i.e., the wiper blade 14A) can be changed in four stages. First, at the time when the wiper is stopped, as shown in Fig. 7, the abutting portion 36 of the spring lever 34 is supported in abutment with the lower contact surface 52 of the cam 38. One end of the tensile spring 30 (i.e., the position in which that end is supported by the spring lever 34) is in a state in which it is closest to the arm head 18. For this reason, the arm pressure of the wiper arm 12A due to the tensile spring 30 is at the lowest level. In addition, in this state, as shown in Fig. 8A, the projection 56 of the cam 38 abuts against the side wall of the notched portion 60 of the motor gear 58.

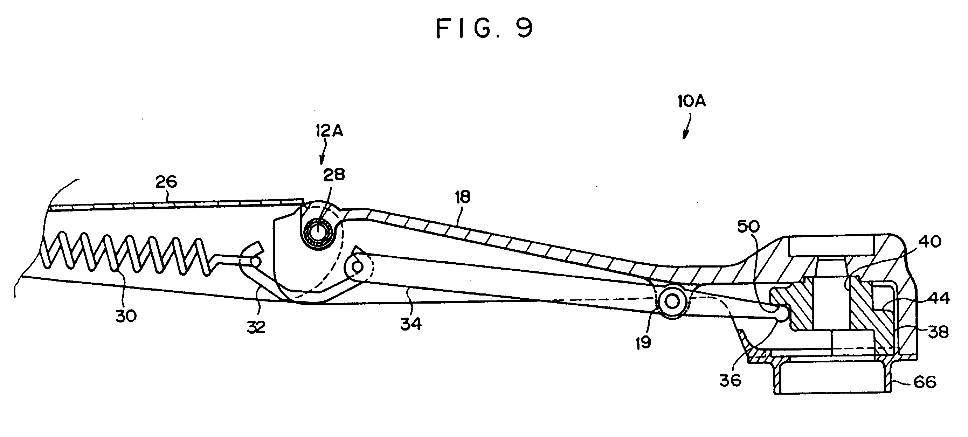

At this juncture, if the wiper apparatus 10 is actuated at the time of low-speed running of the vehicle, as shown in Figs. 8B and 8C, the arm head 18 moves in an opening direction (i.e., in the direction of arrow O) together with the spring lever 34 as the pivot shaft 22 rotates. In this case, since the rotation of the cam 38 is prevented by the motor gear 58, the abutting portion 36 of the spring lever 34 slides from the lower contact surface 52 of the cam 38 consecutively to the slanted surface 54 and to the lower contact surface 50. At an upper reversing position of the wiper arm 12A, the abutting portion 36 is supported in abutment with the lower contact surface 50 of the cam 38 (see Fig. 8C). Accordingly, as shown in Fig. 9, the one end of the tensile spring 30 (i.e., the position in which that end is supported by the spring lever 34) is set in a state in which it is slightly spaced apart from the arm head 18. Consequently, the arm pressure of the wiper arm 12A due to the tensile spring 30 increases.

Furthermore, when the arm head 18 is reversed and moves in the closing direction (in the direction of arrow C), since the rotation of the cam 38 is not prevented by the motor gear 58 in this case, the cam 38 rotates together with the spring lever 34 (see Fig. 8D) while the abutting portion 36 is maintained in abutment with the lower contact surface 50. Furthermore, when the wiper arm 12A reaches a lower reversing position, the abutting portion 36 remains abutting against the lower contact surface 50, but the projection 56 of the cam 38 is brought into contact with a side wall of the notched portion 60 of the motor gear 58 (see Fig. 8E).

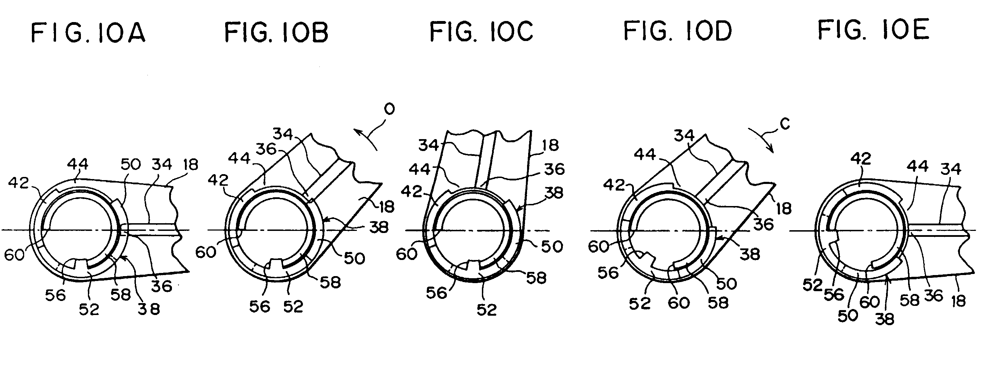

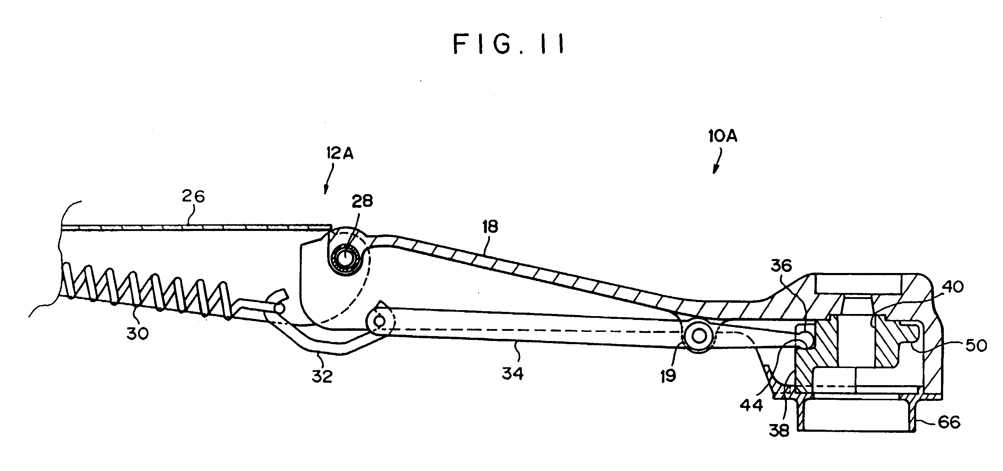

In addition, as the vehicle speed increases and the vehicle reaches a middle-speed running state, the motor 64 is operated to rotate the motor gear 58 in the closing direction, as shown in Fig. 10A. The other side wall of the notched portion 60 of the motor gear 58 is brought into contact with the projection 56 of the cam 38. Then, as the pivot shaft 22 rotates, as shown in Figs. 10B and 10C, the arm head 18 moves together with the spring lever 34 in the opening direction. In this case, since the rotation of the cam 38 is prevented by the motor gear 58, the abutting portion 36 of the spring lever 34 moves from the lower contact surface 50 of the cam 38 consecutively to the gap portion 48 and to the upper contact surface 44. At the upper reversing position of the wiper arm 12A the abutting portion 36 is supported in abutment with the upper contact surface 44 of the cam 38 (see Fig. 10C). Accordingly, as shown in Fig. 11, the one end of the tensile spring 30 (i.e., the position in which that end is supported by the spring lever 34) is in a state in which it is further spaced apart from the arm head 18. Consequently, the arm pressure of the wiper arm 12A due to the tensile spring 30 further increases.

Furthermore, when the arm head 18 reverses and moves in the closing direction, since the rotation of the cam 38 is not prevented by the motor gear 58, the cam 38 rotates together with the spring lever 34 (see Fig. 10D), and the abutting portion 36 is maintained in abutment with the upper contact surface 44. Then, when the wiper arm 12A reaches the lower reversing position, the abutting portion 36 remains abutting against the upper contact surface 44, but the projection 56 of the cam is brought into contact with the side wall of the notched portion of the motor gear 58 (see Fig. 10E).

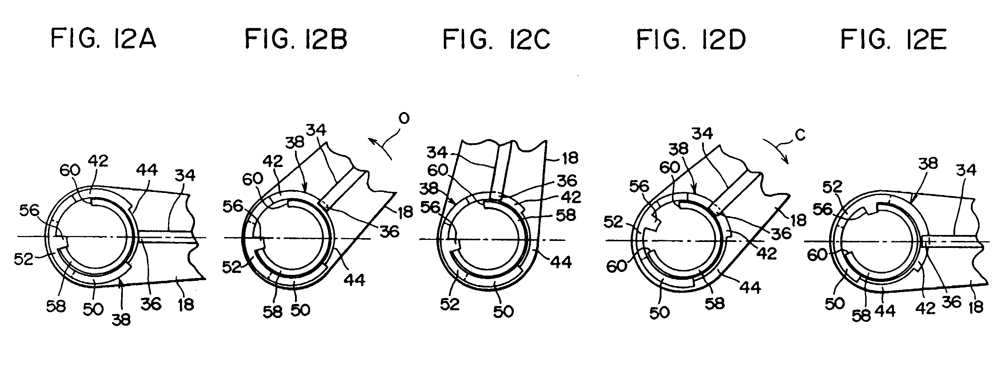

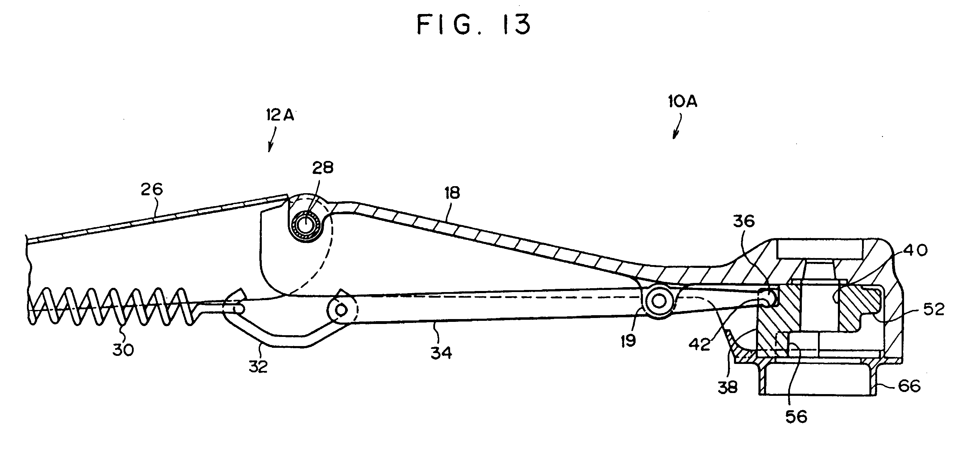

As the vehicle speed increases and the vehicle reaches a high-speed running state, the motor 64 is operated to rotate the motor gear 58 further in the closing direction. As a result, as shown in Fig. 12A, the other side wall of the notched portion 60 of the motor gear 58 is brought into contact with the projection 56 of the cam 38. Furthermore, as the pivot shaft 22 rotates, as shown in Figs. 12B and 12C, the arm head 18 moves together with the spring lever 34 in the opening direction. In this case, since the rotation of the cam 38 is not prevented by the motor gear 58, the abutting portion 36 of the spring lever 34 moves from the upper contact surface 44 consecutively to the slanted surface 46 and to the upper contact surface 42, and at the upper reversing position of the wiper arm 12A the abutting portion 36 is supported in abutment with the upper contact surface 42 of the cam 38 (see Fig. 12C). Accordingly, as shown in Fig. 13, the one end of the tensile spring 30 (i.e., the position in which that end is supported by the spring lever 34) is set in a state in which it is farthest from the arm head 18. Consequently, the arm pressure of the wiper arm 12A due to the tensile spring 30 assumes a maximum value.

Furthermore, when the arm head 18 reverses and moves in the closing direction, since the rotation of the cam 38 is not prevented by the motor gear 58, the cam 38 rotates together with the spring lever 34 (see Fig. 12D), and the abutting portion 36 is maintained in abutment with the upper contact surface 42. Then, when the wiper arm 12A reaches the lower reversing position, the abutting portion 36 remains abutting against the upper contact surface 42, but the projection 56 of the cam 38 is brought into contact with the side wall of the notched portion 60 of the motor gear 58 (see Fig. 12E).

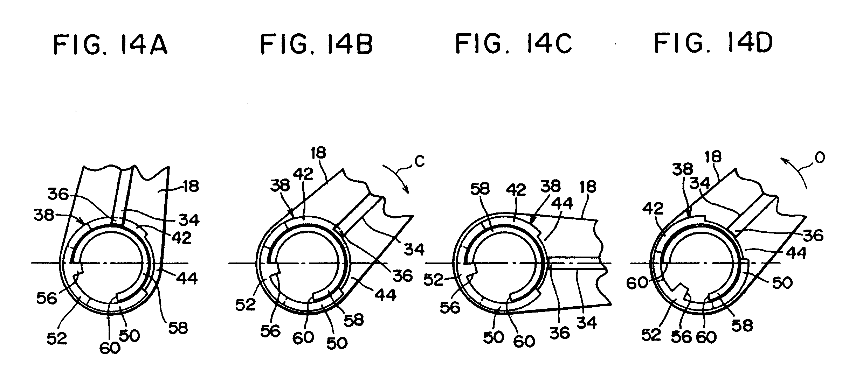

Meanwhile, in cases where the vehicle speed decreases and the arm pressure is reduced from the aforementioned maximum arm pressure, the motor gear 58 is rotated in an opposite direction to the one described above, i.e., in the opening direction. As a result, as shown in Fig. 14A, the other side wall of the notched portion 60 of the motor gear 58 is brought into contact with the projection 56 of the cam 38. Then, as shown in Figs. 14B and 14C, as the pivot shaft 22 rotates, the arm head 18 moves together with the spring lever 34 in the closing direction. In this case, since the rotation of the cam 38 is prevented by the motor gear 58, the abutting portion 36 of the spring lever 34 moves from the upper contact surface 42 consecutively to the slanted surface 46 and to the upper contact surface 44. At the lower reversing position of the wiper arm 12A, the abutting portion 36 is supported in abutment with the upper contact surface 44 of the cam 38 (see Fig. 14C). Accordingly, the position in which the tensile spring 30 is supported by the spring lever 34 approaches the arm head 18 again, so that the arm pressure of the wiper arm 12A is reduced.

Furthermore, as the arm head 18 reverses and moves in the opening direction, since the rotation of the cam 38 is not prevented by the motor gear 58 in this case, the cam 38 rotates together with the spring lever 34 (see Fig. 14D). Hence, the abutting portion 36 is maintained in abutment with the upper contact surface 44.

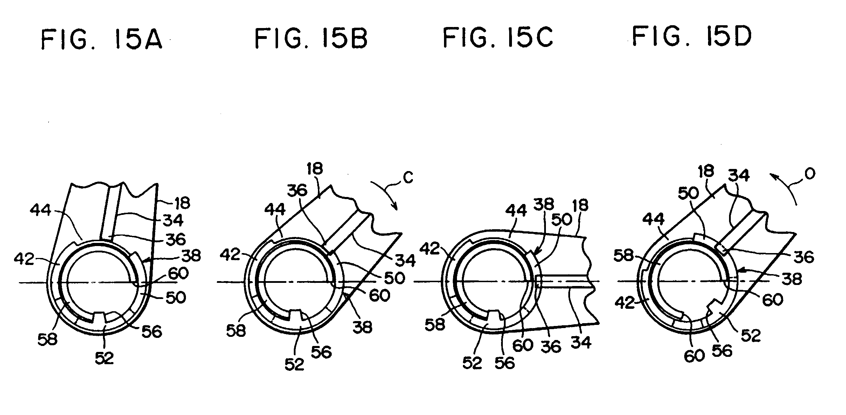

When the vehicle speed has further declined and the arm pressure is further reduced, the motor gear 58 is rotated further in the opening direction. As a result, as shown in Fig. 15A, the side wall of the notched portion 60 of the motor gear 58 is brought into contact with the projection 56 of the cam 38. Then, as shown in Figs. 15B and 15C, as the pivot shaft 22 rotates, the arm head 18 moves together with the spring lever 34 in the closing direction. In this case, since the rotation of the cam 38 is prevented by the motor gear 58, the abutting portion 36 of the spring lever 34 moves from the upper contact surface 44 back to the lower contact surface 50 via the gap portion 48. At the lower reversing position of the wiper arm 12A, the abutting portion 36 is supported in abutment with the lower contact surface 50 of the cam 38 (see Fig. 15C). Accordingly, the position in which the tensile spring 30 is supported by the spring lever 34 further approaches the arm head 18, so that the arm pressure of the wiper arm 12A is reduced further.

Subsequently, as the arm head 18 reverses and moves in the opening direction, since the rotation of the cam 38 is not prevented by the motor gear 58 in this case, the cam 38 rotates together with the spring lever 34 (see Fig. 15D), and the abutting portion 36 is maintained in abutment with the lower contact surface 50.

Thus, as the cam 38 is rotated in correspondence with the running speed of the vehicle, it is possible to change the position in which the tensile spring 30 is supported by the spring lever 34, and it is possible to set the arm pressure of the wiper arm 12A to an optimum level corresponding to the running speed.

It should be noted that the positional relationships between the spring lever 34 and the notched portion 60 of the motor gear 58 in Figs. 10A, 12A, 14A, and 15A are mere examples, and that the arm pressure can be changed to a predetermined level at any time during the reciprocating motion of the wiper arm 12A, even if the motor gear 58 is not necessarily located at a predetermined position when the wiper arm 12A is at the closed position or the open position, i.e., insofar as the motor gear 58 is finally stopped at a predetermined position. Furthermore, if the height of the contact surface of the cam 38 is set in such a manner that the spring lever 34 is aligned with an extension of the line of action of the tensile spring at an intermediate position midway in the process of changing the arm pressure (i.e., in the low-speed running state or the middle-speed running state), namely, when the abutting portion 36 of the spring lever 34 is on the upper contact surface 44 of the cam 38, then the pressing force of the spring lever 34 acting on the contact surface can be set to 0, i.e., in a neutral state. Accordingly, the required rotating torque of the cam 38 in this state can only be set in such a manner as to correspond to the loss caused by frictional resistance. In addition, in the other states of change, since the spring lever 34 is rotated in the vertical direction from the neutral state, the component force of the spring can be held to a low level. Hence, the torque of the motor 64 can be made small, thereby making it possible to render the motor 64 compact.

In addition, in this neutral state, wiping performance is not affected by the component parts for changing the arm pressure, so that the arm pressure is at a predetermined level. Hence, the setting of the arm pressure is facilitated and it is possible to control the variation of the arm pressure.

When the wiper apparatus 10 is stopped after being operated by changing the arm pressure in correspondence with the running state of the vehicle, the cam 38 is rotated, which in turn causes the abutting portion 36 of the spring lever 34 in the initial state to abut against the lower contact surface 52 of the cam 38. The position in which the tensile spring 30 is supported by the spring lever 34 is brought closest to the arm head 18, thereby allowing the arm pressure to be reset to the lowest level.

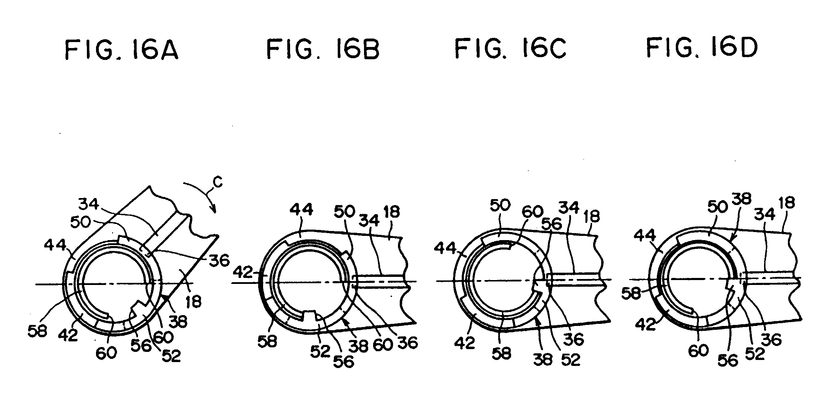

For instance, when the wiper apparatus 10 is stopped from the low-speed running state of the vehicle, i.e., from the state of slightly low arm pressure (see Fig. 16A), the motor gear 58 is rotated in the opening direction after the arm head 18 has reached the lower reversing position to complete a wiping operation. As a result, as shown in Figs. 16B and 16C, the side wall of the notched portion 60 of the motor gear 58 presses the projection 56 of the cam 38 to rotate the cam 38, and the abutting portion 36 of the spring lever 34 moves consecutively from the lower contact surface 50 to the slanted surface 54 and then back to the lower contact surface 52, thereby allowing the arm pressure to be reset to its initial state, i.e., the lowest level.

Subsequently, the motor gear 58 is rotated in the closing direction, the operating state of the apparatus is set in the state shown in Fig. 16D, i.e., in the state of standby from the state of a minimum arm pressure to the state of low-speed running. Accordingly, in the subsequent pressure-increasing step shown in Figs. 8A to 8E, the motor 64 is not operated, and the pressure increase is completed by the reciprocating motion of the wiper motor 64. That is, even when the motor 64 cannot be operated owing to some fault, a minimum required arm pressure can be secured.

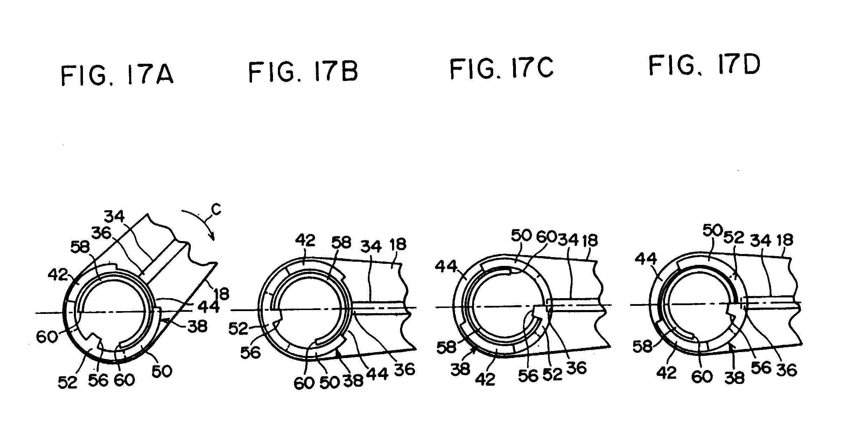

In addition, when the wiper apparatus 10 is stopped from the middle-speed running state of the vehicle, i.e., from the state of high arm pressure (see Fig. 17A), the motor gear 58 is rotated in the opening direction after the arm head 18 has reached the lower reversing position to complete the wiping operation. As a result, as shown in Figs. 17B and 17C, the side wall of the notched portion 60 of the motor gear 58 presses the projection 56 of the cam 38 to rotate the cam 38, and the abutting portion 36 of the spring lever 34 moves from the upper contact surface 44 consecutively to the gap portion 48 and to the lower contact surface 50, then back to the lower contact surface 52 via the slanted surface 54, thereby resetting the arm pressure to the initial state, i.e., the lowest level. Subsequently, the motor gear 58 is rotated in the closing direction in the same way as described above, and is set in the standby state.

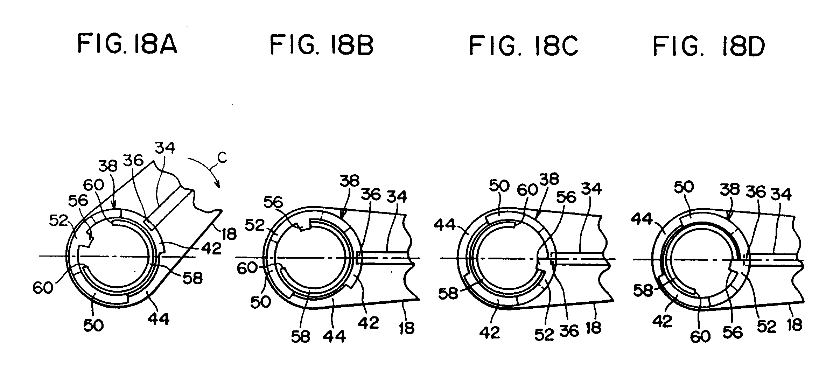

Furthermore, when the wiper apparatus 10 is stopped from the high-speed running state of the vehicle, i.e., from the state of the highest arm pressure (see Fig. 18A), the motor gear 58 is rotated in the opening direction after the arm head 18 has reached the lower reversing position to complete the wiping operation. As a result, as shown in Figs. 18B and 18C, the side wall of the notched portion 60 of the motor gear 58 presses the projection 56 of the cam 38 to rotate the cam 38, and the abutting portion 36 of the spring lever 34 moves from the upper contact surface 42 consecutively to the slanted surface 46 and to the upper contact surface 44, further to the gap portion 48 and the lower contact surface 50, then back to the lower contact surface 52 via the slanted surface 54. Thus, the operating state of the apparatus is reset to the initial state, i.e., the state of the lowest arm pressure. Subsequently, the motor gear 58 is rotated in the closing direction in the same way as described above, and is set in the standby state.

Thus, at the time of stopping the wiper apparatus 10, the operating state of the apparatus can be set immediately to the initial state by rotating the cam 38.

It should be noted that although the mechanism adopted in the above-described embodiment is such that four contact surfaces are formed on the cam 38 so as to change the arm pressure in four stages, the present invention is not restricted to the same, and more contact surfaces may be formed to change the arm pressure in a multiplicity of stages. In addition, an arrangement may be provided such that the contact surface is formed continuously so that the arm pressure can be changed continuously in a stepless manner. Even in such cases, the position in which the tensile spring 30 is supported can be altered by rotating the cam 38 in correspondence with the running speed of the vehicle, and the arm pressure of the wiper arm 12A can be set to an optimum level corresponding to the running speed.

In addition, although in the above-described embodiment a description has been given mainly with respect to the right wiper 10A of the parallel-interlocked wiper apparatus 10, it goes without saying that the present invention is also applicable to the left wiper 10B which is constructed in the way as the right wiper 10A. Moreover, the present invention is not only applicable to the parallel-interlocked wiper apparatus but the so-called one-arm wiper apparatus.

As described above, the windshield wiper for a vehicle in accordance with the present invention is capable of speedily setting the arm pressure to an optimum level corresponding to the running speed of the vehicle. Hence, the present invention offers outstanding advantages in that the wiping performance can be enhanced irrespective of the running speed of the vehicle by always bringing the blade rubber into close contact with the windshield surface, and that the windshield wiper can be realized with a compact and simple structure.

## Claims

1. A windshield wiper with a wiping pressure selectively adjustable to a low, an intermediate, a high or a maximum pressure level, in a vehicle having a windshield, said windshield wiper with adjustable wiping pressure comprising an arm head (18) fixed to a wiper drive shaft (22) above said windshield, a wiper arm (26) pivoted to said arm head (18) so as to pivot towards and away from said windshield about a support axis (28), a wiper blade (14A,14B) mounted to said wiper arm (26) so as to engage said windshield with a wiping pressure dependent upon the torque exerted on said wiper arm (26) as measured about said support axis (28), a spring lever (34) rotatably supported by an intermediate portion (19) of said arm head (18) facing the windshield so as to pivot up or down about said intermediate portion (19), a tension spring (30) having a first end fixed to said wiper arm (26) and a second end fixed to a first end of said spring lever (34) through a hook (32), the second end (36) of said spring lever (34) abutting against a cam member for adjusting the wiping pressure of the wiper on the windshield, and a cam member moving member (58) disposed co-axially and rotatably with said cam member (38) to transmit a driving force from a driving means (64) to said cam member (38) so as to rotate said cam member (38), thereby changing the position in which said spring lever (34) is supported, characterized in that said cam member (38) has a plurality of contact surfaces (42, 44, 50, 52) provided with varying heights along an axial direction thereof and adapted to stably support said spring lever (34), said plurality of contact surfaces (42, 44, 50, 52) being arranged in the circumferential direction thereof, said cam member (38) being adapted to change a reaction force of said spring (30) as the one end of said spring lever (34) is consecutively brought into contact with said contact surfaces (42, 44, 50, 52) and is thereby moved.

2. A windshield wiper according to claim 1, wherein said cam member (38) is freely rotatable about said pivot shaft (22) and has a plurality of contact surfaces (42, 44, 50, 52) arranged along a circumferential direction thereof, said contact surfaces (42, 44, 50, 52) being adapted to rotate relative to said cam member moving member (58) such that said spring lever (34) and said cam member (38) are made integral about said pivot shaft (22) by means of a pressing force of said spring lever (34).

3. A windshield wiper according to claim 2, wherein said cam member (38) and said cam member moving member (58) are rotatable relative to each other over the range of a predetermined angle, and when said cam member moving member (58) rotates by more than the predetermined angle, said cam member moving member (58) rotates said cam member (38).

4. A windshield wiper according to claim 1, wherein when the vehicle speed has changed beyond a predetermined range, said cam member moving member (58) is rotated by said driving means (64) so as to cause one end of said spring lever (34) to move so as to engage one of a plurality of contact surfaces (42, 44, 50, 52) of said cam member (38) corresponding to the vehicle speed.

5. A windshield wiper according to claim 3, wherein said cam member (38) has a projection (56), said cam member (38) and said cam member moving member (58) being disposed in such a manner as to be rotatable relative to each other, and when said cam member (38) has rotated over the range of the predetermined angle, said projection (56) engages said cam member moving member (58).

6. A windshield wiper according to claim 5, wherein said cam member moving member (58) is constituted by a substantially cylindrical member disposed on an inner side of said cam member (38), said cam member moving member (58) being provided with a notched portion (60) extending circumferentially at a portion of an outer periphery thereof, said projection (56) being fitted in said notched portion (60) with a clearance.

7. A windshield wiper according to claim 1, wherein said contact surfaces (42, 44, 50, 52) comprise first contact surfaces (50, 52) for pressing one end of said spring lever (34) in one direction along an axis of said pivot shaft (22) and second contact surfaces (42, 44) for pressing the same in an opposite direction along the axis, so as to change the position in which said spring lever (34) is supported.

8. A windshield wiper according to claim 7, wherein a neutral position (48) in which said spring lever (34) is not subjected to a force from said cam member (38) is provided circumferentially between said first contact surfaces (50, 52) and said second contact surfaces (42, 44).

9. A windshield wiper according to claim 8, wherein slanted surfaces (46, 54) are respectively provided between adjacent ones of said contact surfaces (42, 44, 50, 52) so that the position in which the one end of said spring lever (34) is supported can be changed continuously.

10. A windshield wiper according to claim 8, wherein said contact surfaces (42, 44, 50, 52) are formed by a slanted surface so that the position in which the one end of said spring lever (34) is supported can be changed steplessly.

11. A windshield wiper according to claims 1 and 2, wherein the one end of said spring lever (34) is formed in a substantially spherical configuration so as to slide on said contact surfaces (42, 44, 50, 52) of said cam member (38).

## Patentansprüche

1. Scheibenwischer mit einem auf ein niedriges, ein hohes oder ein maximales Druckniveau selektiv einstellbaren Wischdruck an einem Fahrzeug mit einer Windschutzscheibe, wobei der Scheibenwischer mit einstellbarem Wischdruck Folgendes aufweist: einen Armkopf (18), der oberhalb der Windschutzscheibe an einer Wischerantriebswelle (22) befestigt ist, einen am Armkopf (18) um eine Lagerachse (28) hin zur und weg von der Windschutzscheibe drehbar gelagerten Wischerarm (26), ein Wischerblatt (14A, 14B), das am Wischerarm (26) derart montiert ist, dass es an der Windschutzschreibe mit einem Wischdruck anliegt, der von dem auf den Wischerarm (26) ausgeübten Drehmoment, wie es um die Lagerachse (28) gemessen wird, abhängig ist, einen Federhebel (34), der von einem Zwischenteil (19) des Armkopfes (18), der zur Windschutzscheibe hin zeigt, derart drehbar gehalten ist, dass er um den Zwischenteil (19) auf oder ab schwenkbar ist, eine Zugfeder (30) mit einem ersten Ende, das an dem Wischerarm (26) befestigt ist, und einem zweiten Ende, das an einem ersten Ende des Federhebels (34) über einen Haken (32) befestigt ist, wobei das zweite Ende (36) des Federhebels (34) an einem Nockenbauauteil zum Einstellen des Wischdrucks des Wischers auf der Windschutzscheibe liegt, und ein das Nockenbauteil bewegendes Bauteil (58), das koaxial zum und drehbar mit dem Nockenbauteil (38) angeordnet ist, um eine Antriebskraft von einer Antriebsvorrichtung (64) auf das Nockenbauteil (38) zu übertragen und so das Nockenbauteil (38) zu drehen, wodurch die Position, in der der Federhebel (34) gehalten ist, veränderbar ist, **dadurch gekennzeichnet**, dass das Nockenbauteil (38) eine Vielzahl von Kontaktflächen (42, 44, 50, 52) besitzt, die mit variierenden Höhen entlang dessen axialer Richtung versehen und zur stabilen Lagerung des Federhebels (34) ausgebildet sind, und dass die Vielzahl der Kontaktflächen (42, 44, 50, 52) in dessen Umfangsrichtung angeordnet sind, dass das Nockenbauteil (38) derart ausgebildet ist, dass die Reaktionskraft der Feder (30) in der Weise geändert wird, wie das eine Ende des Federhebels (34) mit den Kontaktflächen (42, 44, 50, 52) nacheinander in Berührung gebracht und dadurch bewegt wird.

2. Scheibenwischer nach Anspruch 1, dadurch gekennzeichnet, dass das Nockenbauteil (38) um die Drehwelle (22) frei drehbar ist und eine Vielzahl von Kontaktflächen (42, 44, 50, 52) entlang einer Umfangsrichtung besitzt, dass die Kontaktflächen (42, 44, 50, 52) relativ zum das Nockenbauteil bewegenden Bauteil (58) drehbar sind, so dass durch die Druckkraft des Federhebels (34) der Federhebel (34) und das Nockenbauteil (38) gemeinsam um die Drehwelle (22) drehbar sind.

3. Scheibenwischer nach Anspruch 2, dadurch gekennzeichnet, dass das Nockenbauteil (38) und das das Nockenbauteil bewegende Bauteil (58) relativ zueinander um den Bereich eines vorbestimmten Winkels drehbar sind, und dass dann, wenn das das Nockenbauteil bewegende Bauteil (58) um mehr als den vorbestimmten Winkel rotiert, das das Nockenbauteil bewegende Bauteil (58) das Nockenbauteil (38) dreht.

4. Scheibenwischer nach Anspruch 1, dadurch gekennzeichnet, dass dann, wenn sich die Fahrzeuggeschwindigkeit gegenüber einem vorbestimmten Bereich geändert hat, das das Nockenbauteil bewegende Bauteil (58) durch die Antriebsmittel (64) rotierend angetrieben wird, so dass das eine Ende des Federhebels (34) bewegt wird, damit es an einer aus einer Vielzahl von Kontaktflächen (42, 44, 50, 52) des Nockenbauteils (38) entsprechend der Fahrgeschwindigkeit zur Anlage kommt.

5. Scheibenwischer nach Anspruch 3, dadurch gekennzeichnet, dass das Nockenbauteil (38) einen Vorsprung (56) besitzt, dass das Nockenbauteil (38) und das das Nockenbauteil bewegende Bauteil (58) in einer Art und Weise angeordnet ist, dass sie relativ zueinander drehbar sind, und dass dann, wenn das Nockenbauteil (38) um einen Bereich des vorbestimmten Winkels gedreht wurde, der Vorsprung (56) das das Nockenbauteil bewegende Bauteil (58) erfasst.

6. Scheibenwischer nach Anspruch 5, dadurch gekennzeichnet, dass das das Nockenbauteil bewegende Bauteil (58) durch ein im wesentlichen zylindrisches Bauteil, das auf einer Innenseite des Nockenbauteils (38) angeordnet ist, gebildet ist, dass das das Nockenbauteil bewegende Bauteil (58) mit einem ausgesparten Bereich (60) versehen ist, der sich an einem Bereich von dessen Außenumfang umfangsseitig erstreckt, wobei der Vorsprung (56) in dem ausgesparten Bereich (60) mit Spiel eingepasst ist.

7. Scheibenwischer nach Anspruch 1, dadurch gekennzeichnet, dass die Kontaktflächen (42, 44, 50, 52) erste Kontaktflächen (50, 52) zum Drücken eines Endes des Federhebels (34) in eine Richtung entlang der Achse der Drehwelle (22) und zweite Kontaktflächen (42, 44) zum Drücken desselben in eine entgegengesetzte Richtung entlang der Achse, so dass die Position, in welcher der Federhebel (34) gelagert ist, verändert wird, aufweisen.

8. Scheibenwischer nach Anspruch 7, dadurch gekennzeichnet, dass eine neutrale Position (48), in der der Federhebel (34) nicht mit einer Kraft von dem Nockenbauteil (38) beaufschlagt ist, umfangsseitig zwischen den ersten Kontaktflächen (50, 52) und den zweiten Kontaktflächen (42, 44) vorgesehen ist.

9. Scheibenwischer nach Anspruch 8, dadurch gekennzeichnet, dass Schrägflächen (46, 54) zwischen benachbarten Kontaktflächen (42, 44, 50, 52) vorgesehen sind, so dass die Position, in der das eine Ende des Federhebels (34) gehalten ist, kontinuierlich veränderbar ist.

10. Scheibenwischer nach Anspruch 8, dadurch gekennzeichnet, dass die Kontaktflächen (42, 44, 50, 52) als Schrägfläche ausgebildet sind, so dass die Position, in welcher das eine Ende des Federhebels (34) gehalten ist, stufenlos veränderbar ist.

11. Scheibenwischer nach den Ansprüchen 1 und 2, dadurch gekennzeichnet, dass ein Ende des Federhebels (34) in einer im Wesentlichen kugelförmigen Konfiguration ausgebildet ist, so dass es auf den Kontaktflächen (42, 44, 50, 52) des Nockenbauteils (38) gleiten kann.

## Revendications

1. Essuie-glace pour pare-brise ayant une pression d'essuyage pouvant être ajustée de manière sélective vers un niveau de pression faible, intermédiaire, élevé ou maximal, dans un véhicule ayant un pare-brise, ledit essuie-glace pour pare-brise ayant une pression d'essuyage pouvant être ajustée comportant une tête (18) de bras fixée à un arbre d'entraînement (22) d'essuie-glace situé au-dessus dudit pare-brise, un bras (26) d'essuie glace pivotant sur ladite tête (18) de bras de manière à pivoter vers le pare-brise et en s'éloignant dudit pare-brise autour d'un axe formant support (28), une lame (14A, 14B), d'essuie-glace montée sur ledit bras (26) d'essuie-glace de manière à être en contact avec ledit pare-brise en ayant une pression d'essuyage fonction du couple exercé sur ledit bras (26) d'essuie-glace tel que mesuré autour dudit axe formant support (28), un levier à ressort (34) supporté de manière rotative par une partie intermédiaire (19) de ladite tête (18) de bras en vis à vis du pare-brise de manière à ce qu'il pivote vers le haut ou vers le bas autour de ladite partie intermédiaire (19), un ressort de traction (30) ayant une première extrémité fixée audit bras (26) d'essuie-glace et une seconde extrémité fixée à une première extrémité du levier à ressort (34) par l'intermédiaire d'un crochet (32), la seconde extrémité (36) dudit levier à ressort (34) étant en butée contre un élément formant came destiné à ajuster la pression d'essuyage de l'essuie-glace sur le pare-brise, et un élément (58) déplaçant l'élément formant came est disposé de manière coaxiale à l'élément formant came (38) et rotative par rapport à ce dernier pour transmettre une force d'entraînement provenant de moyens d'entraînement (64) dudit élément formant came (38) de manière à mettre en rotation ledit élément formant came (38), en changeant par conséquent la position dans laquelle ledit levier à ressort (34) est supporté, caractérisé en ce que ledit élément formant came (38) a plusieurs surfaces de contact (42, 44, 50, 52) ayant des hauteurs variables le long d'une direction axiale de celui-ci et sont adaptées pour supporter de manière stable ledit levier à ressort (34), lesdites plusieurs surfaces de contact (42, 44, 50, 52) étant agencées dans la direction circonférentielle de celui-ci, ledit élément formant came (38) étant adapté pour changer la force de réaction dudit ressort (30) lorsque la première extrémité dudit levier à ressort (34) est amenée en contact de manière consécutive avec lesdites surfaces de contact (42, 44, 50, 52) et est par conséquent déplacée.

2. Essuie-glace pour pare-brise selon la revendication 1, dans lequel ledit élément formant came (38) peut être librement mis en rotation autour dudit arbre de pivotement (22) et a plusieurs surfaces de contact (42, 44, 50, 52) agencées le long de sa direction circonférentielle, lesdites surfaces de contact (42, 44, 50, 52) étant adaptées pour tourner par rapport audit élément (58) déplacant l'élément formant came de sorte que ledit levier à ressort (34) et ledit élément formant came (38) sont réalisés formant un tout autour dudit arbre de pivotement (22) à l'aide d'une force d'appui dudit levier à ressort (34).

3. Essuie-glace pour pare-brise selon la revendication 2, dans lequel ledit élément formant came (38) et ledit élément (58) déplaçant l'élément formant came peuvent être mis en rotation l'un par rapport à l'autre sur une plage constituée d'un angle prédéterminé, et lorsque ledit élément (58) déplaçant l'élément formant came tourne sur plus que l'angle prédéterminé, ledit élément (58) déplaçant l'élément formant came met en rotation l'élément formant came (38).

4. Essuie-glace pour pare-brise selon la revendication 1, dans lequel lorsque la vitesse du véhicule a changé au delà d'une plage prédéterminée, ledit élément (58) déplaçant l'élément formant came est mis en rotation par lesdits moyens d'entraînement (64) de manière à entraîner une première extrémité dudit levier à ressort (34) à se déplacer de manière à venir en contact avec une première des plusieurs surfaces de contact (42, 44, 50, 52) dudit élément formant came (38) correspondant à la vitesse du véhicule.

5. Essuie-glace pour pare-brise selon la revendication 3, dans lequel ledit élément formant came (38) a une saillie (56), ledit élément formant came (38) et ledit élément (58) déplaçant l'élément formant came étant disposés d'une manière telle qu'ils peuvent être mis en rotation l'un par rapport à l'autre, et lorsque ledit élément formant came (38) a tourné sur la plage constituée de l'angle prédéterminé, ladite saillie (56) vient en contact avec l'élément (58) déplacant l'élément formant came.

6. Essuie-glace pour pare-brise selon la revendication 5, dans lequel ledit élément (58) déplaçant l'élément formant came est constitué d'un élément à peu près cylindrique disposé sur un côté intérieur dudit élément formant came (38), ledit élément (58) déplaçant l'élément formant came étant muni d'une partie à encoche (60) s'étendant de manière circonférentielle au niveau d'une partie d'une périphérie extérieure de celui-ci, ladite saillie (56) étant agencée avec jeu dans ladite partie à encoche (60).

7. Essuie-glace pour pare-brise selon la revendication 1, dans lequel lesdites surfaces de contact (42, 44, 50, 52) comportent des premières surfaces de contact (50, 52) destinées à appuyer la première extrémité dudit levier à ressort (34) dans une première direction le long d'un axe dudit arbre de pivotement (22) et des secondes surfaces de contact (42, 44) destinées à appuyer cette même extrémité dans une direction opposée le long de l'axe, de manière à changer la position dans laquelle ledit levier à ressort (34) est supporté.

8. Essuie-glace pour pare-brise selon la revendication 7, dans lequel une position neutre (48) dans laquelle ledit levier à ressort (34) n'est pas soumis à une force provenant dudit élément formant came (38) est prévue de manière circonférentielle entre lesdites premières surfaces de contact (50, 52) et lesdites secondes surfaces de contact (42, 44).

9. Essuie-glace pour pare-brise selon la revendication 8, dans lequel des surfaces inclinées (46, 54) sont prévues de manière respective entre des surfaces adjacentes desdites surfaces de contact (42, 44, 50, 52) de sorte que la position dans laquelle la première extrémité dudit levier à ressort (34) est supportée peut être changée de manière continue.

10. Essuie-glace pour pare-brise selon la revendication 8, dans lequel ledites surfaces de contact (42, 44, 50, 52) sont formées par une surface inclinée de sorte que la position dans laquelle la première extrémité dudit levier à ressort (34) est supportée peut être changée sans à-coup.

11. Essuie-glace pour pare-brise selon les revendications 1 et 2, dans lequel la première extrémité dudit levier à ressort (34) est formée ayant une configuration à peu près sphérique de manière à glisser sur ledites surfaces de contact (42, 44, 50, 52) dudit élément formant came (38).
